# EUROPEAN PATENT APPLICATION

(11) **EP 3 093 774 A1**
(43) Date of publication of application: **16.11.2016**
(21) Application number: 15167542.8
(22) Date of filing: 13.05.2015
(51) Int. Cl.: G06F 17/30

(54) **FULL TEXT DATABASE SEARCH SYSTEM**

(71) Applicant: Agfa HealthCare, 53227 Bonn (DE)
(72) Inventor: Sutorius, Norman, 2640 Mortsel (BE)
(74) Representative: Verbrugghe, Anne Marie L.

(57) **Abstract**

A database search system implemented on a computer, comprising a search interface displaying a single input field configured to receive input information corresponding to at least one search parameter to be used for a search of said database, and wherein the search interface is further arranged for displaying a search result; a search priority table, storing search priority information setting out an order for searching columns in the tables of said database; a search engine configured to search said database for said input information, wherein the search engine is configured to extract one or more search results by searching the columns of the database as determined by and in the order of said search priority table, and to transmit search results immediately as they become available to the search interface for display.

## Description

### FIELD OF THE INVENTION

The present invention relates generally to a system and method for improving database search performance of searches involving more then one data-field or column of a database.

### BACKGROUND OF THE INVENTION

Methods exist in the art intended to improve often different characteristics of database searches, such as the performance or speed of a database search and the quality of the obtained search results.

Many methods are known in the art to enhance the quality of the search results of a database search. The quality of the search result is typically evaluated by the user who requested the search in the first place, and is therefore subject to human evaluation and interpretation. Many different algorithms have been developed for different types of searches on different kind of data. Very complex algorithms may be applied giving impressive search results as can be experienced on a daily basis when using internet search engines such as Google.com.

The scope of this invention is however not to improve the quality of the result of a search of a database, but rather to improve the performance of the search process, and in particular the performance of a search process which looks up a simple keyword in multiple database columns. The "performance" in this case has to be understood as the time that is required by the database search engine to come up with the correct and intended result. A shorter search time means a better search performance.

An application illustrating such a particular type of search is a keyword search on patient data of a hospital database. For this particular application, the user interface supporting such a search may be implemented in different ways. A traditional implementation of such a user interface could be a graphical user interface window comprising different editable search fields, the number of editable search fields corresponding to the number of database columns which may be searched through this interface. In this case, the labels of the different editable search fields identify the corresponding data stored in the corresponding column of the database table.

In this type of interface, the input data for the search has to be entered into the desired input field which corresponds to the database column which will be searched. In this case, the user has to select the correct input field which needs to be searched; a database search of the keyword will only be performed on the corresponding database column.

The aforementioned traditional type of user interface is very effective for ensuring maximum search speed of a keyword search on a specific criterion, but requires the user to initiate the search command by carefully selecting the correct search field amongst the multitude of available search fields on the interface. The optimal search performance is in this case achieved because of the simple fact that the keyword only has to be looked up in the correct data column where it is expected; only one database column has to be searched. However, the drawback of this method is that the user has to manually seek out the correct search field to enter the input data, which may be a cumbersome task when many different database columns are offered for searching in a search window. A typical hospital database search window may access easily more then 6 different search criteria in a database, which would result in a search window offering more then 6 different locations to enter the input data. In this case the interface can become cluttered and complex.

The limitations of this approach can be overcome by the use of a single input field rather then using multiple input fields when a search needs to be performed in more then a single database column. An input interface having a single input field however also suffers from some drawbacks, in that the same optimal search performance may not be achieved automatically since multiple columns need to be searched in consecutive order (rather then only a single one).

### SUMMARY OF THE INVENTION

The purpose of this invention is to improve search performance of database searches involving more then one data-field or column of a database.

The present invention provides a system as set out in claim 1, and provides a database search system implemented on a computer, comprising a search interface displaying a single input field configured to receive input information corresponding to at least one search parameter to be used for a search of said database, and wherein the search interface is further arranged for displaying a search result; a search priority table, storing search priority information setting out an order for searching columns in the tables of said database, a search engine configured to search said database for said input information, wherein the search engine is configured to extract one or more search results by searching the columns of the database as determined by and in the order of said search priority table, and to transmit search results immediately as they become available to the search interface for display.

The above-described aspects are solved by a system as set out in claim 1. The invention disclosed in this application solves the problem that a non-prioritized search of the database results in slow result production when a single input field provides the input information for a multi-column database search. The search performance risks to be lower compared to a situation where the search is initiated by a traditional multi input field user interface. The optimal search performance may not be achieved without specifying the optimal search order for the columns.

In the context of the present invention, the database is for instance a hospital database which stores different types of information in different tables. The tables are organized in rows (representing the records), and columns (representing the fields of a record).

When a user performs a keyword search on such a hospital database, he intends to find the correct record (or multiple records) stored in the database, which matches the input information he entered, as quickly as possible. In the application of a simple keyword search on multiple database columns, there may be different valid outcomes resulting from the keyword comparison between the input information and the data stored in the individual records stored in the database tables which are being searched. The keyword search may reveal a match against a value stored in a record with tag A, whereas it may also reveal a second or further match against a data element stored in another record for a different tag then tag A...

The type of data which is being searched may be a keyword or another data type, such as a number, a date or a code. The methods used by the search engine for these comparisons are typically well known string operations, such as exact-string comparisons, or partial string comparisons. The database search is an iterative process which compares the entered input data from the user against the data stored in all individual records which are stored in the database. All records in the database tables are being read and compared in a sequential way against the input information.

For the purpose of improving the performance of the database searches, and thus enhancing the speed of a complete database search, different methods have been developed at the level of the database engine itself which generally then contribute to the efficiency of the algorithms performed on a database.

As opposed to other search systems or methods described in the art, the invention described in this application is not targeted toward the optimization of the search results, or to enhance the quality of the results coming from the searches.

This invention intends to optimize the speed of a search under the particular circumstance that multiple items per record in the same or a different table need to be compared against the search condition.

In other words, this invention relates to the case that for each record of a database table, at least 2 different record items (which can be found in at least 2 different database fields of the record, and which are therefore stored in different columns of a database table) need to be compared against the search condition. In this case, the default search methods may be one of the two following methods:
- Either, the string comparison will be performed first on the first field (or column) to be searched of the database, followed by a string comparison on the next field or column (column based search),
- Or, the search will be performed on all fields to be searched within a record (row based search), before progressing to the next record.

In the first case (the column based search), the different columns of the database tables are searched in a consecutive order, meaning that a first criterion (field or record item in a first column) will be searched against first, before the string comparison against the second criterion is being started. Therefore, in the case that a search result is found in the first column, it will come up first, before potential results in the second column may be found and can be displayed. It is obvious that when the column is searched first which contains the expected search result, the search performance will be optimal. In terms of search efficiency, it is thus obvious that the order of the search on the columns to be searched is very important. An optimization can thus be achieved in the case that the column where the search result may be expected is searched first.

In the context of this invention, the search priority table is a database table which contains the search priority order for the different columns to be searched by the database engine.

The embodiments of the systems and methods described herein may be implemented in hardware or software, or a combination of both. However, preferably, these embodiments are implemented in computer programs executing on programmable computers each comprising at least one module component which comprises at least one processor (e.g. a microprocessor), a data storage system (including volatile and non-volatile memory and/or storage elements), at least one input device, and at least one output device. For example and without limitation, the programmable computers (referred to here as computer systems) may be a personal computer, laptop, personal data assistant, and cellular telephone, smart-phone device, tablet computer, and/or wireless device. Program code is applied to input data to perform the functions described herein and generate output information. The output information is applied to one or more output devices, in known fashion.

Each program is preferably implemented in a high level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device (e.g. ROM or magnetic diskette) readable by a general or special purpose programmable computer, for configuring and operating the computer when the storage media or device is read by the computer to perform the procedures described herein. The subject system may also be considered to be implemented as a computer-readable storage medium, configured with a computer program, where the storage medium so configured causes a computer to operate in a specific and predefined manner to perform the functions described herein.

The present invention can be implemented as a computer program product adapted to carry out the steps set out in the description. The computer executable program code adapted to carry out the steps set out in the description can be stored on a computer readable medium.

Specific examples and preferred embodiments are set out in the dependent claims.

The present invention is beneficial in that it improves the performance of a database search in the case that multiple columns are being searched in a consecutive order. As a consequence, it allows that the limitations of the methods described in the art suffering from cluttered search interfaces are mitigated by limiting the number of search fields which are presented to the searcher to (optimally) only one search field.

It also is beneficial in that the optimization of the search priority may be configured per user of the database, resulting in different search practices (or optimizations) depending on the usage history of the user.

Further advantages and embodiments of the present invention will become apparent from the following description and drawings.

### BRIEF DESCRIPTION OF THE DRAWINGS

Fig. 1 shows a database table, showing a record of data in the table as a row [20]. Each record comprises different fields [11-15], which are stored in the database table as columns. The data of field [11] are stored in the table in column [10].
Fig. 2 shows a graphical user interface window [30] comprising different editable search fields [31-36], the number of editable search fields corresponding to the number of database columns which may be searched through this interface. The labels of the different editable search fields [40] identify the corresponding data stored in the corresponding column of the database table.
Fig. 3 shows a graphical user interface window [50] comprising a single editable search field [51], and a section displaying the search results [52].
Fig. 4 shows the search system disclosed in this invention, comprising the search interface [60], the database [70] which is subject to the search, the search engine [80] which performs the search, and the search priority table [90] which determines the order of the columns to be searched during the search.
Fig. 5 shows the same search system as in Fig. 4, but additionally shows the search frequency data table [100] representing the search frequency of the columns during historically recorded usage of the database table.

### DETAILED DESCRIPTION OF THE INVENTION

In the following detailed description, reference is made in sufficient detail to the above referenced drawings, allowing those skilled in the art to practice the embodiments explained below.

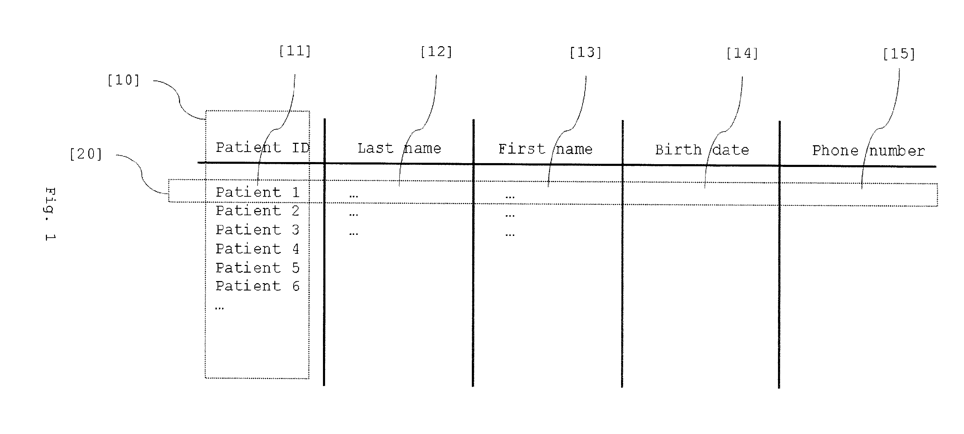

Fig. 1 represents an embodiment of a database table in a hospital database which is subjected to a search by the search system disclosed in this invention. The database table is an ordered structure of data stored in different records [20], and contains a set of set of data fields [11-15] which are present for every record. The records are represented by the rows in the table.

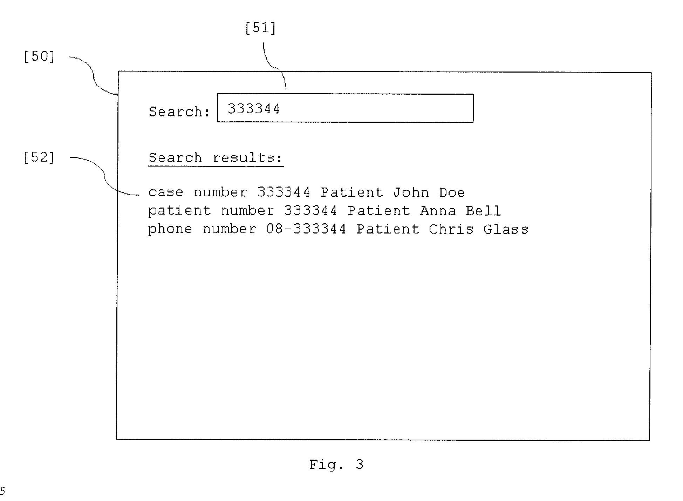

Fig. 3 represents an example of an embodiment of a graphical user interface showing a single editable search field [51] in which a user will enter a single or multiple search keywords. The data entered in this user interface are committed and transferred to the search engine of the system, when a confirmation command is given (by clicking on the "OK"-button, or pressing the "Enter"-key). The different elements of the graphical user interface may be organized differently, but essentially comprises an input area, and a result display area.

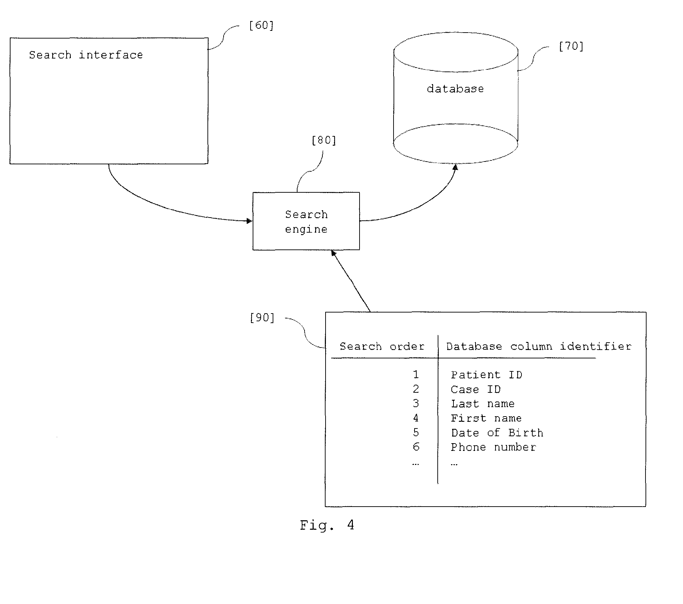

Fig.4 is a diagram showing the components of an embodiment of the search system. The search interface [60] is the graphical user interface as described above. The search interface [60] captures the input information entered by the user, and transmits it to the search engine [80]. The search engine will initially retrieve the search order information from the search priority table [90] from the database [70]. This information is stored in a memory associated with the search engine [80].

Before starting the search, the search engine [80] will first retrieve the reference to the data column with the highest search priority as indicated in the search priority table [90]. The search engine will start searching for the search keyword in said column with the highest search priority first, before proceeding with the search for the same search keyword in the next prioritized column indicated in the search priority table. The search engine performs the search by comparing the search keyword against the contents of the data fields.

During the search process and in the event that the search engine finds a match of the search keyword in a record of the database [60], the record reference (record number or other data field in this record) will be promptly sent to the graphical user interface [50] to the effect that search results will be displayed as soon as they are found during the search process. This means that the results will incrementally start to appear in the section showing the search results [52] during the running search process itself. The purpose of the prioritization is to attempt to find the most relevant search result as soon as possible. When the search is completed any number of results may be displayed in the results section of the graphical user interface.

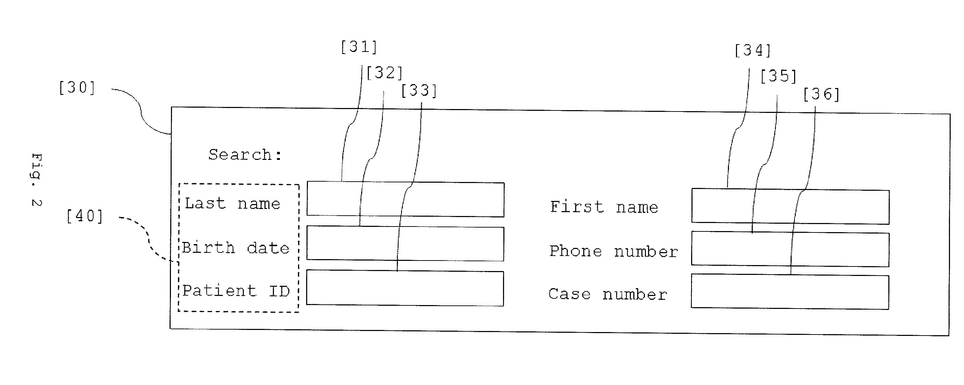

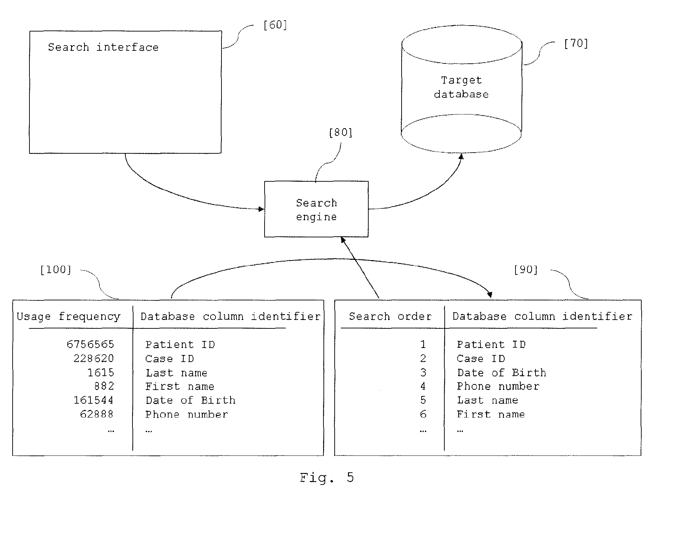

Fig.5 is a diagram illustrating another embodiment of the invention, which essentially performs the same steps as explained above, but where the priority table [90] is first calculated based on data which have been collected during previous uses of the same search engine, on the same database in the past. The search frequency data table [100] is a data table which represents the historic usage count of the different data columns during a database search of the database, when the database was accessed by a graphical interface comprising different editable search fields [31-36], as described under Fig.2. Since the use of this type of graphical user interface requires the user to carefully select the correct editable search field to obtain the correct search result, it is possible to record the criteria for which searches have been performed (and thus which columns of the database were preferentially searched). The search priority table [90] is thus calculated by ordering the database columns by usage frequency as recorded in the search frequency data table [100], and storing this ordering in the search priority table [90]. This operation may be performed by the search engine [80] or another module or component provided in the search system.

In another embodiment, the search priority table [90] may be compiled in a similar way as explained above, but where the usage data are collected and processed for each user of the database. As such, the search priority table may be adapted for each user, leading to different database column search priorities for each individual user.

## Claims

1. A database search system implemented on a computer, comprising:
- a search interface displaying a single input field configured to receive input information corresponding to at least one search parameter to be used for a search of said database, and wherein the search interface is further arranged for displaying a search result;
- a search priority table, storing search priority information setting out an order for searching columns in the tables of said database,
- a search engine configured to search said database for said input information, wherein the search engine is configured to extract one or more search results by searching the columns of the database as determined by and in the order of said search priority table, and to transmit search results immediately as they become available to the search interface for display.

2. The search system according to claim 1, wherein the priority table is created by processing (historic) search frequency data of said database columns in a similar keyword database search and by ordering them by usage frequency.

3. The search system according to claim 2, wherein said (historic) search frequency data of said database columns are processed by said search engine, and then subsequently stored into said priority table.

4. The search system according to claim 2, wherein the usage frequency data of said database columns are being processed per individual database user, and a search priority table is created for each user.

5. A method implemented on a computer for searching a database, comprising the steps of:
- displaying a single input field on a search interface configured to receive one or more keywords,
- upon receiving input (from the user) of at least one keyword in said input field corresponding to at least one search parameter,
- retrieving search priority data from a search priority database which comprises search priority information for said database of the columns to be searched in the tables of said database,
- searching for said input information in the columns of said database as determined by and in the order of said search priority table,
- transmitting the relevant search results immediately to the search interface,
- displaying said search results as soon as they become available in the search interface.

6. The method as described in claim 5, wherein the priority table is created by processing (historic) search frequency data of said database columns in a similar keyword database search and by ordering them by usage frequency.

7. The method as described in claim 6, wherein said (historic) search frequency data of said database columns are processed by said search engine, and then subsequently stored into said priority table.

8. The method as described in claim 6, wherein the usage frequency data of said database columns are being processed per individual database user, and a search priority table is created for each user.
